# EUROPEAN PATENT SPECIFICATION

(11) **EP 0 423 470 B1**
(45) Date of publication and mention of the grant of the patent: **25.05.1994**
(21) Application number: 90116481.4
(22) Date of filing: 28.08.1990
(51) Int. Cl.: A23L 1/33, A23L 3/34, A23L 3/3463, A23B 4/023, A23B 7/154

(54) **Method of preventing color change of food**
Verfahren zur Vorbeugung von Farbwechsel bei Nahrungsmitteln
Méthode pour la prévention de changement de couleur à partir de denrées alimentaires

(30) Priority: 16.10.1989 JP 268746/89
(43) Date of publication of application: 24.04.1991
(73) Proprietor: Seiwa Technological Laboratories, Limited, Tokyo (JP)
(72) Inventor: Natori, Yoshiko, c/o Seiwa Technological Lab. Ltd., Tokyo (JP); Ryutaro, Fukazawa, c/o Seiwa Technological Lab Ltd, Tokyo (JP)
(74) Representative: Kraus, Walter, Dr.

(56) References cited:
- AU-B- 575 958
- PATENT ABSTRACTS OF JAPAN vol. 13, no. 79 (C-571)(3427), 22 February 1989; & JP - A - 63269942 (SEINA KASEI K.K.) 08.11.1988
- PATENT ABSTRACTS OF JAPAN vol. 14, no. 14 (C-674)(3957), 12 January 1990; & JP - A - 1257427 (TAIYO FISHERY CO. LTD.) 13.10.1989
- PATENT ABSTRACTS OF JAPAN vol. 6, no. 85 (C-103)(963), 22 May 1982; & JP - A - 57166682 (KIBUN K.K.) 28.01.1982
- PATENT ABSTRACTS OF JAPAN vol. 12, no. 92 (C-483)(2939), 25 March 1988; & JP - A - 62224261 (NIPPON SEIFUN K.K.) 02.10.1987

## Description

This invention relates to a method of preventing a color change of food. More particularly, it is concerned with a method in which kojic acid is used to prevent food from undergoing color change and deterioration because of the activities of enzymes contained in crustaceans or vegetables and fruits. The present invention provides a method by which kojic acid can be put into practical use.

The present inventors have disclosed that kojic acid (5-hydroxy-2-hydroxymethyl-τ-pyrone) has a remarkable effect against an enzymatic color change of food (Japanese Unexamined Patent Publication No. 269942/1988).
A suitable buffering solution is preferably used to adjust the pH of an aqueous solution containing kojic acid and ascorbic acid or/and an alkali metal salt thereof to about 3.0 - 7.0, and the aqueous solution is then brought into contact with a food within the above-mentioned pH range.

Patent Abstracts of Japan, vol. 6, No. 85 (C-103) (963), May 22, 1982, refers to a food preservative consisting of one or two or more food chelating agents selected from the group consisting of citric acid, tartaric acid, malic acid, lactic acid, succinic acid, polyphosphoric acid, phytic acid or a sodium salt thereof, phytin, kojic acid and glutamic acid and a sucrose ester of a fatty acid having an HLB of 3 - 5 as active constituents. The resultant preservative is used as a preservative for marine products, or marine fish paste products, livestock meat and processed livestock meat foods, processed starchy foods, processed soybean foods, processed egg foods, vegetables and processed vegetables, fruits, etc.

Patent Abstracts of Japan, vol. 12, No. 92 (C-483) (2939), March 25, 1988, refers to the prevention of fading of meat food by adding thereto kojic acid and sodium ascorbate.

Patent Abstracts of Japan, vol. 14, No. 14 (C-674) (3957) is concerned with a method of treating lobster and crab comprising e.g. spraying thereon a solution of kojic acid.

Crustaceans, or vegetables and fruits such as apples, yams, and lettuce undergo color changes in a short time after they are captured, collected, peeled or cut. This phenomenon is caused by the mechanism that enzymes such as tyrosinase and polyphenol oxidase contained in food are activated to produce reaction products such as meranine and polyquinone. The activities of these enzymes in food can be strongly inhibited by kojic acid, as disclosed in the above patent publication.

Before such discovery, techniques to prevent this phenomenon have provided nothing but use of SO₂. The SO₂, however, is under severe control for its residue from the viewpoint of food sanitation, which is so controlled as to be not more than 100 ppm for prawns or shrimps, and not more than 30 ppm for other general foods including crabs. Particularly in the case of crustaceans, no sufficient effect can be obtained in some instances when SO₂ is used within the range of the controlled amount, and it often occurs that commercial products containing it beyond the controlled amount are on the market. In fresh vegetables and fruits, it is not permitted to use SO₂.

According to the method already disclosed by the present inventors, kojic acid has a remarkable effect on the prevention of color changes of crustaceans or vegetables and fruits, which can be said to be a safe method even only in view of the fact that SO₂ is not used. The method, however, has a problem that kojic acid reacts with iron to form a complex salt having a reddish blown color. In usual instances, the water used in a treatment solution for treating these foods contains iron more or less in its quantity, and hence it has often occurred that a color tone of a treatment solution turns deep with a continuous increase in the quantity of treated foods and resultingly the foods are colored.

An object of the present invention is to solve the above problem.

The present inventors made intensive studies in order to solve this problem. As a result, they have found that the problem can be solved by treating crustaceans or vegetables and fruits with a treatment solution containing kojic acid and controlled to have a pH of from 3.0 to 5.0, wherein an acid capable of adjusting the pH of said treatment solution to said pH range is added to said treatment solution when the pH thereof becomes more than about 5.0 in the course of treatment of said food.

Treatment of these foods with such a treatment solution can prevent their color changes caused by the reaction between the iron contained in the water used and the kojic acid, thereby inhibiting enzymatic color changes ascribable to tyrosinase or polyphenol oxidase contained in the foods.

The present invention is a method of preventing a color change of food, which inhibits an enzymatic color change ascribable to tyrosinase or polyphenol oxidase contained in food, by the use of kojic acid, comprising treating said food with a treatment solution containing kojic acid and controlled to have a pH of from about 3.0 to 5.0, wherein an acid capable of adjusting the pH of said treatment solution to said pH range is added to said treatment solution when the pH thereof becomes more than about 5.0 in the course of treatment of said food.

In the studies made by the present inventors, a variety of chelating compounds were used, which have been conventionally used as a means for blocking metal ions. No effect, however, was obtainable at all in respect of the substances falling under the scope as prescribed in the Food Sanitation Law. More specifically, in the course of continuous treatment of food, in particular, crustaceans such as a lobster and a crab, by the use of a given amount of a treatment solution comprising kojic acid dissolved therein, their color tones turned deep with an increase in the quantity of treated lobsters or crabs in spite of no great change in the amount of iron contained in the treatment solution.

Then, the present inventors considered that this was caused by an increase in the pH since many basic substances such as amines contained in the bodies of lobsters or crabs should have dissolved in the treatment solution. They have elucidated the correlation between them, and thus accomplished the present invention.

In an experimental procedure for establishing the present invention, a pure water solution of a given enzyme selected from tyrosinase, polyphenol oxidase and so forth (in a concentration that enables prevention of blackening of lobsters or crabs) is adjusted to have a pH of 3.5 and thereafter ferrous sulfate is added so as to have a constant iron concentration of 5 ppm. A treatment solution is thus prepared. In a bath ratio of 3:1 (3 for the treatment solution and 1 for the weight of lobsters or crabs), lobsters or crabs are immersed in the treatment solution for a given period of time (1 minute) and then drawn up. After removal of water, the lobsters or crabs are put in a container, and stored therein at 5°C to observe whether or not they are blackened and also whether or not they are colored because of a complex salt. In the course of repeated treatment of lobsters or crabs by the use of the same treatment solution, the pH thereof increases with an increase in the repetition of treatment and the color tones of lobsters or crabs also turn deep. When the pH becomes more than 5.0, white parts of lobsters or crabs turns slightly reddish brown, and the effect of preventing blackening also gradually becomes lower. When the pH of the treatment solution has become more than 5.0, the pH is lowered to 3.0 using an acid, so that the treatment solution turns very pale yellow and the lobsters or crabs are not colored at all during their storage. The effect of preventing blackening can also be recovered. However, if the pH of the treatment solution is made less than 3.0, the meat quality of lobsters or crabs undergoes a remarkable change as a result of their immersion for 1 minute, resulting in a loss of their value as a commercial product. Namely, when the pH is controlled in the range of from 3.0 to 5.0, the kojic acid can inhibit the enzymatic color change and also prevent the coloring due to the formation of a complex salt of kojic acid with iron while keeping the meat quality of lobsters or crabs in a good state.

In the case when apples which have been peeled and sliced are treated with the treatment solution, the pH of the solution does not increase even after repeated treatment. In the case of sliced potatoes, however, the pH becomes more than 5.0 as a result of frequent repetition of the treatment using the same treatment solution, although not so rapidly than when lobsters or crabs are treated. Thus, it is necessary to maintain the pH in the range of from 3.0 to 5.0. In the case of cut lettuce, frequent repetition of treatment brings about only a little change of the pH when the treatment solution is set to have a pH of from 3.0 to 5.0. In the treatment of edible fungi such as mushrooms, the pH of the treatment solution increases to 6.0 to 7.0, and hence it is necessary to maintain the pH in the range of from 3.0 to 5.0.

Acids used in the course of treatment, for maintaining the treatment solution to have a pH of from 3.0 to 5.0 includes not only organic acids for food, edible oxo acids, and hydro-acids that render a solution acidic.

The present invention will be specifically described below by giving Examples.

### Reference Example

### Coloring due to the formation of a complex salt of kojic acid with iron, depending on the difference in the pH:

In 1 ℓ of pure water, 3 g of kojic acid, 6 g of KH₂PO₄ and 13.5 mg of FeSO₄ were dissolved. The resulting solution had a pH of about 3.5, had an OD (optical density) of 0.226 at an wavelength of 450 nm and exhibited a pale yellow color. When ammonia water was added to increase the pH to about 5.5, the solution turned reddish brown and had an OD of 0.685. When various acids were each added to the resulting solution so as to adjust the pH to about 5.0, about 4.0 and about 3.0, the concentration of acids and the OD of the resulting solution were as shown in Table I.

### Example 1

### Prevention of color change of cuts of snow crab (Chionocecetes opilio Fabridius):

In 2 ℓ of city water, 6 g of kojic acid (available from Seiwa Technoindustry Co.) and 12 g of KH₂PO₄ (available from Wako Pure Chemical Industries, Ltd.) were dissolved to give a treatment solution. The treatment solution had a pH of 3.5 and had an iron content of 0.5 ppm. Taking account of water, containers, etc. to be used in an actual environment in which crabs are treated, 24.3 g of ferrous sulfate was added to increase the iron content to 5 ppm.

Shoulders (with crusts) of freezed north-sea snow crab were taken off. About 600 to 700 g of the crab meat was used for each treatment, and was immersed in the treatment solution for 1 minute. Thereafter, the crab meat thus treated was put in a polyethylene bag, which was sealed and stored at 5°C. The same procedure was continuously repeated 10 times. As a result, the pH of the treatment solution, the color (OD) of the treatment solution, the manner by which the pH was adjusted, the color of the treatment solution after adjustment of the pH, the effect of preventing color changes of crab meat, and the coloring to crab meat by virtue of a complex salt, all for each treatment, were as shown in Table II.

### Example 2

### Prevention of color change of sliced potatoes:

In 2 ℓ of city water, 6 g of kojic acid (available from Seiwa Technoindustry Co.) and 12 g of KH₂PO₄ (available from Wako Pure Chemical Industries, Ltd.) were dissolved to give a treatment solution. The treatment solution had a pH of 3.5 and had an iron content of 0.5 ppm. Taking account of water, containers, etc. to be used in an actual environment in which potatoes are treated, 24.3 g of ferrous sulfate was added to increase the iron content to 5 ppm.

Commercially available potatoes were peeled and then sliced in a thickness of about 0.5 mm. About 700 g of the sliced potatoes were used for each treatment, and were immersed in the treatment solution for 1 minute. Thereafter, the sliced potatoes thus treated were put in a polyethylene bag, which were sealed and stored at 10°C. The same procedure was continuously repeated 10 times. As a result, the pH of the treatment solution, the color (OD) of the treatment solution, the manner by which the pH was adjusted, the color of the treatment solution after adjustment of the pH, the effect of preventing color changes of sliced potatoes, and the coloring to sliced potatoes by virtue of a complex salt, all for each treatment, were as shown in Table III.

**Table I**

| | pH 5.5 → 5.0 | OD | pH 5.5 → 4.0 | OD | pH 5.5 → 3.0 | OD |
|---|---|---|---|---|---|---|
| 80% citric acid: | 0.7 mℓ | 0.307 | 1.1 mℓ | 0.220 | 3.4 mℓ | 0.166 |
| 60% malic acid: | 0.9 mℓ | 0.336 | 1.5 mℓ | 0.241 | 3.9 mℓ | 0.203 |
| 40% isoascorbic acid: | 2.4 mℓ | 0.350 | 4.2 mℓ | 0.268 | 12.8 mℓ | 0.211 |
| Phytic acid: | 0.4 mℓ | 0.342 | 0.6 mℓ | 0.245 | 0.8 mℓ | 0.208 |

**Table II**

| Treatment times | pH | OD | Addition of 80% citric acid | pH after addition | OD after addition | Color change prevention (days) | Colorring due to complex salt |
|---|---|---|---|---|---|---|---|
| 0 | 3.5 | 0.180 | | | | | |
| 1 | 3.8 | 0.206 | | | | 4 | - |
| 2 | 4.3 | 0.271 | | | | 3.2 | - |
| 3 | 4.7 | 0.294 | | | | 3.2 | - |
| 4 | 5.2 | 0.603 | | | | 2.5 | + |
| 5 | 5.8 | 0.711 | 7.0 mℓ | 3.1 | 0.169 | 1.8 | ++ |
| 6 | 3.4 | 0.177 | | | | 4 | - |
| 7 | 4.0 | 0.222 | | | | 3.5 | - |
| 8 | 4.7 | 0.296 | | | | 3.2 | + |
| 9 | 5.1 | 0.609 | 2.0 mℓ | 3.8 | 0.207 | 2 | + |
| 10 | 4.2 | 0.265 | | | | 3.2 | - |
| Notes: 1) "Color change prevention" shows the days taken until blackening of shoulders of crab meat occurred. 2) "Coloring due to complex salt" shows the degree of coloring due to a complex salt, at white parts of shoulders, where "-" indicates "none"; "+", "slightly colored"; and "++", "plainly colored" | | | | | | | |

**Table III**

| Treatment times | pH | OD | Addition of 40% isoascorbic acid | pH after addition | OD after addition | Color change prevention (days) | Colorring due to complex salt |
|---|---|---|---|---|---|---|---|
| 0 | 3.5 | 0.180 | | | | | |
| 1 | 3.5 | 0.181 | | | | 3 | - |
| 2 | 3.6 | 0.189 | | | | 3 | - |
| 3 | 3.7 | 0.202 | | | | 3 | - |
| 4 | 3.9 | 0.222 | | | | 3 | - |
| 5 | 4.1 | 0.249 | | | | 2.5 | - |
| 6 | 4.7 | 0.293 | | | | 2.1 | - |
| 7 | 5.1 | 0.600 | | | | 1.5 | ± |
| 8 | 5.3 | 0.606 | | | | 1.5 | + |
| 9 | 5.8 | 0.710 | 8.4 mℓ | 4.0 | 0.221 | 1 | ++ |
| 10 | 4.3 | 0.270 | | | | 2.5 | - |
| Notes: 1) "Color change prevention" shows the days taken until blackening of the surfaces of slices occurred. 2) "Coloring due to complex salt" shows the degree of coloring due to a complex salt, at the surface of slices where "-" indicates "none"; "+", "slightly colored"; "±", intermediate between "+" and "-"; and "++", "plainly colored" | | | | | | | |

As having been described in the above, the present invention has made it possible to inhibit an enzymatic color change of food on a practical level, without use of SO₂ to which restrictions are imposed form the viewpoint of food sanitation, and using kojic acid also contained in food.

## Claims

1. A method of preventing a color change of food, which inhibits an enzymatic color change ascribable to tyrosinase or polyphenol oxidase contained in food, by the use of kojic acid, comprising treating said food with a treatment solution containing kojic acid and controlled to have a pH of from 3.0 to 5.0, wherein an acid capable of adjusting the pH of said treatment solution to said pH range is added to said treatment solution when the pH thereof becomes more than about 5.0 in the course of treatment of said food.

2. A method of preventing a color change of food according to claim 1, wherein said acid is selected from the group consisting of citric acid, malic acid, isoascorbic acid, and phytic acid.

3. A method of preventing a color change of food according to claim 1, wherein said food is selected from the group consisting of a lobster, a prawn, a shrimp, a crab, a yam, a potato, and lettuce.

## Patentansprüche

1. Verfahren zur Verhinderung einer Farbveränderung von Lebensmitteln, das eine enzymatische Farbveränderung, die auf die in den Lebensmitteln enthaltene Tyrosinase oder Polyphenoloxidase zurückzufuhren ist, unter Verwendung von Kojisäure verhindert, dadurch **gekennzeichnet,** daß man das Lebensmittel mit einer Behandlungslösung behandelt, die Kojisäure enthält und so kontrolliert wird, daß sie einen pH-Wert von 3,0 bis 5,0 besitzt, wobei eine Säure mit der Fähigkeit zur Einstellung des pH-Werts der Behandlungslösung auf den pH-Wert-Bereich der Behandlungslösung zugesetzt wird, wenn der pH-Wert davon über etwa 5,0 im Verlauf der Behandlung des Lebensmittels steigt.

2. Verfahren zur Verhinderung einer Farbveränderung von Lebensmitteln nach Anspruch 1, dadurch **gekennzeichnet,** daß die Säure aus der Gruppe Zitronensäure, Äpfelsäure, Isoascorbinsäure und Phytinsäure ausgewählt wird.

3. Verfahren zur Verhinderung einer Farbveränderung von Lebensmitteln nach Anspruch 1, dadurch **gekennzeichnet,** daß das Lebensmittel aus der Gruppe Hummer, Garnele, Shrimps, Krabben, Süßkartoffel, Kartoffel und Kopfsalat ausgewählt ist.

## Revendications

1. Méthode de prévention d'un changement de couleur dans les aliments, qui inhibe un changement de couleur enzymatique imputable à la tyrosinase ou à la polyphénol oxydase contenue dans les aliments, par l'utilisation de l'acide kojique, et qui comprend le traitement dudit aliment avec une solution traitante contenant de l'acide kojique et contrôlée de façon à avoir un pH compris entre 3,0 et 5,0, dans laquelle un acide capable d'ajuster le pH de ladite solution traitante dans ledit intervalle de pH est ajouté à ladite solution traitante lorsque le pH de cette dernière devient supérieur à environ 5.0 durant le traitement dudit aliment.

2. Méthode de prévention d'un changement de couleur dans les aliments, suivant la revendication 1, dans laquelle ledit acide est choisi parmi un groupe comprenant l'acide citrique, l'acide malique, l'acide iso-ascorbique et l'acide phytique.

3. Méthode de prévention d'un changement de couleur dans les aliments suivant la revendication 1, dans laquelle ledit aliment est choisi parmi un groupe comprenant la langouste, le bouquet, la crevette, le crabe, la patate douce, la pomme de terre, et la laitue.
